(19) Europäisches Patentamt
European Patent Office
Office européen des brevets

(11) **EP 2 333 716 A1**

(12) **EUROPEAN PATENT APPLICATION**
published in accordance with Art. 153(4) EPC

(43) Date of publication:
**15.06.2011 Bulletin 2011/24**

(51) Int Cl.:
**G06Q 50/00** *(2006.01)*

(21) Application number: **09815913.0**

(22) Date of filing: **28.09.2009**

(86) International application number:
**PCT/JP2009/004924**

(87) International publication number:
**WO 2010/035494 (01.04.2010 Gazette 2010/13)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.09.2008 JP 2008250023**

(71) Applicant: **Japan Tobacco, Inc.**
**Tokyo 105-8422 (JP)**

(72) Inventor: **HIRAI, Sadayuki**
**Tokyo 105-8422 (JP)**

(74) Representative: **HOFFMANN EITLE**
**Patent- und Rechtsanwälte**
**Arabellastraße 4**
**81925 München (DE)**

(54) **SYSTEM FOR CALCULATING THE NUMBER OF DISTRIBUTION COURSES AND METHOD FOR CALCULATING THE NUMBER OF DISTRIBUTION COURSES**

(57)     The necessary number of delivery routes is accurately calculated corresponding to properties of an area. A system 100 for calculating the number of delivery routes calculates the necessary number of delivery routes when creating a plurality of delivery routes on which a staff delivers articles sequentially from a base to respective circular-visiting points in an area including the base and the circular-visiting points and returns to the base. A first average value calculating unit 310 calculates average value D of round-trip travel time between the base and the respective circular-visiting points, considering only circular-visiting points where round-trip travel time between the base and respective circular-visiting point amount to a predetermined rate or less when respective round-trip travel time are selected in order of increasing time, with the exception of the other circular-visiting points.

Fig.1

**Description**

TECHNICAL FIELD

The present invention relates to a system for calculating the number of delivery routes and a method for calculating the number of delivery routes.

BACKGROUND ART

Patent Document 1 (Japanese Laid-Open Patent Publication No. 2004-127038) describes a system which divides a region, where a plurality of vending machines are installed, into service areas assigned to staffs who go round the vending machines. The system includes an initial setting unit that sets, in the region where the plurality of vending machines are installed, a plurality of areas each including at least one vending machine, corresponding to the number of staffs; a calculating unit that calculates statistics determined by characteristics of the vending machines included in the individual areas; and a processing unit that repeats a process of adding a vending machine to a specific area to thereby expand the area after selecting the specific area considering the statistics, stops the process if a predetermined condition is satisfied, and determines obtained areas as service areas of the plurality of staffs. In this way, the region where the plural vending machines are installed may be divided into the service areas so as to allow the individual staffs to efficiently go the rounds.

[Related Document]

[Patent Document]

[Patent Document 1] Japanese Laid-Open Patent Publication No. 2004-127038

SUMMARY OF THE INVENTION

[Problems to be Solved by the Invention]

The technique described in Patent Document 1 is configured to calculate, using an approximation algorithm, an order of visiting according to which the stores included in a route may be visited by the shortest path, and thereby to create the route capable of efficiently going the rounds.
By the way, in a practical process of creating a plurality of delivery routes in an area, it is desired to adequately predict the number of delivery routes necessary for the area, in order to predict the number of delivery routes, and to reserve delivery staffs and trucks used for the delivery.
The present invention was devised in view of the above-described problems, and is aimed at providing a technique of accurately calculating the necessary number of delivery routes, corresponding to the characteristics of the area.

[Means for Solving the Problems]

According to the present invention, there is provided a system for calculating the necessary number of delivery routes when creating a plurality of delivery routes on which a staff delivers articles sequentially from a base to respective circular-visiting points in an area including the base and the circular-visiting points and returns to the base. The system includes: a storage unit that stores information that allows for calculation of travel time between the base and the respective circular-visiting points and between any one of the circular-visiting points and any other one of the circular-visiting points, information that allows for calculations of working time A per delivery route and average value C of working time at the respective circular-visiting points, and the number of days of delivery per week and day(s)-of-week available for delivery to each of the respective circular-visiting points; an average value calculating unit that calculates average value D of round-trip travel time between the base and the respective circular-visiting points and average value E of travel time between any one and any other one of the circular-visiting points including in the area based on the information that allows for the calculation of travel time; a number-of-circular-visiting-points calculating unit that calculates the number of circular-visiting points N included per delivery route in the area based on the working time A per delivery route, the average value C of the working time at the circular-visiting points, the average value D of round-trip travel time between the base and the respective circular-visiting points, and the average value E of travel time between any one and any other one of the circular-visiting points; and a number-of-delivery-routes calculating unit that calculates the necessary number of delivery routes P for the area by dividing the number of circular-visiting points M, which is weighted with the number of days of delivery per week to the respective circular-visiting points, by the number of circular-visiting points N. The average value calculating unit calculates the average value D of round-trip travel time between the base and respective circular-visiting points, considering only circular-visiting points where round-trip travel time between the base and respective circular-visiting points amount to a predetermined rate or less when respective round-trip travel time are selected in order of increasing time, with the exception of the other circular-visiting points.

According to the present invention, there is provided a method, executed by a computer system, of calculating the necessary number of delivery routes when creating a plurality of delivery routes on which a staff delivers articles sequentially from a base to respective circular-visiting points in an area including the base and the circular-visiting points and returns to the base. The computer system includes: a storage unit that stores information that allows for calculation of travel time between the base and the respective circular-visiting points and between any one of the circular-visiting points and any other one of the circular-visiting points, information that allows for calculations of working time A per delivery route and average value C of working time at the respective circular-visiting points, and the number of days of delivery per week and day(s)-of-week available for delivery to the respective circular-visiting points; an average value calculating unit; a number-of-circular-visiting-points calculating unit; and a number-of-delivery-routes calculating unit. The average value calculating unit includes: a step of calculating average value D of round-trip travel time between the base and the respective circular-visiting points, and average value E of travel time between any one and any other one of the circular-visiting points included in the area based on the information that allows for the calculation of travel time; a step of calculating the number of circular-visiting points N included per delivery route in the area based on the working time A per delivery route, the average value C of the working time at the circular-visiting points, the average value D of round-trip travel time between the base and the respective circular-visiting points, and the average value E of travel time between any one and any other one of the circular-visiting points; and a step of calculating the necessary number of delivery routes P for the area by dividing the number of circular-visiting points M, which is weighted with the number of days of delivery per week to the respective circular-visiting points, by the number of circular-visiting points N. The average value calculating unit calculates the average value D, in the step of calculating the average value D, considering only circular-visiting points where round-trip travel time between the base and respective circular-visiting points amount to a predetermined rate or less when respective round-trip travel time are selected in order of increasing time, with the exception of the other circular-visiting points.

By virtue of this configuration, an approximated value of the round-trip travel time between the base and the circular-visiting point in each delivery route when actually creating delivery routes may be obtained as the average value D of the round-trip travel time between the base and the circular-visiting points, and thereby the number of delivery routes may accurately be calculated. The circular-visiting point herein may be understood as stores (shops) such as convenience store and supermarket, and vending machines. The "working time A per delivery route" means a time available for substantial delivery operation, obtained by subtracting time for loading articles at the base before the delivery, break time, and working time at the base after the delivery, from the total daily working time per staff assigned to each delivery route.

Note that also arbitrary combinations of the above-described constituents, and any exchanges of expressions in the present invention, made among method, device, system, recording medium, computer program and so forth, are valid as embodiments of the present invention.

[Effect of the Invention]

According to the present invention, the necessary number of delivery routes may accurately be calculated corresponding to characteristics of the area.

BRIEF DESCRIPTION OF THE DRAWINGS

The above-mentioned objects, objects other than them, features, and advantages will become more apparent by the accompanying drawings and the following preferred exemplary embodiments.
FIG. 1 is a block diagram illustrating an exemplary configuration of a system for calculating the number of delivery routes according to an embodiment of the present invention;
FIG. 2 is a drawing illustrating a part of data structure of a delivery information storage unit included in a store information storage unit according to an embodiment of the present invention;
FIG. 3 is a drawing illustrating a part of data structure of a store-to-store travel time storage unit included in the store information storage unit according to an embodiment of the present invention;

FIG. 4 is a flow chart illustrating processing procedures of the system for calculating the number of delivery routes according to an embodiment of the present invention;

FIG. 5 is a drawing illustrating sets of round-trip travel time between a base and the stores, prepared by a first average value calculating unit;

FIG. 6 is a flow chart illustrating procedures by which a second average value calculating unit calculates average value E of the store-to-store travel time;

FIG. 7 is a drawing illustrating an exemplary internal configuration of a temporary storage unit; and

FIG. 8 is a drawing illustrating an exemplary configuration of the delivery information storage unit of the store information storage unit according to an embodiment of the present invention.

## DESCRIPTION OF EMBODIMENTS

Embodiments of the present invention will be explained below, referring to the drawings. Note that, in all drawings, all similar constituents will be given similar reference numerals or symbols, so as to appropriately avoid repetitive explanation.

The embodiments of the present invention will be explained below, referring to a case where the circular-visiting points are stores (shops). The stores may be exemplified by convenience stores, supermarkets and so forth. The stores herein include those each of which the number of days of delivery per week and day(s)-of-week available for delivery are different from each other. In this embodiment, a system for calculating the number of delivery routes calculates the necessary number of delivery routes, when creating a plurality of delivery routes, on which a staff delivers articles sequentially from a base to a plurality of stores (circular-visiting points) in an area and returns to the base.

Now, assuming that the number of delivery routes is calculated on the time basis, the necessary number of delivery routes P may be calculated by the equation below, where the weighted number of stores M may be understood as the number of stores which is weighted store-by-store depending on the number of times of delivery per week. For example, a store characterized by a number of times of delivery per week of "3" will have a weighted number of stores of "3".

$$\text{Number of delivery routes } P = (\text{Weighted number of stores } M)/(\text{Number of stores } N \text{ per delivery route}) \ldots (\text{Equation 1})$$

Now, the number of stores per delivery route N may be calculated by the equation below, where "working time per delivery route A" means a time available for substantial delivery operation, obtained by subtracting time for loading articles at the base before the delivery, break time, and working time at the base after the delivery, from the total daily working time per staff for each delivery route.

$$\text{Number of stores per delivery route } N = [(\text{Working time A per delivery route}) - (\text{Average value D of round-trip travel time between base and stores}) + (\text{Average value E of store-to-store travel time})]/[(\text{Average value C of working time at stores}) + (\text{Average value E of store-to-store travel time})] \ldots (\text{Equation 2})$$

In the embodiments below, features reside in how to calculate the average value D of the round-trip travel time between the base and the stores, and the average value E of the store-to-store travel time.

(First Embodiment)

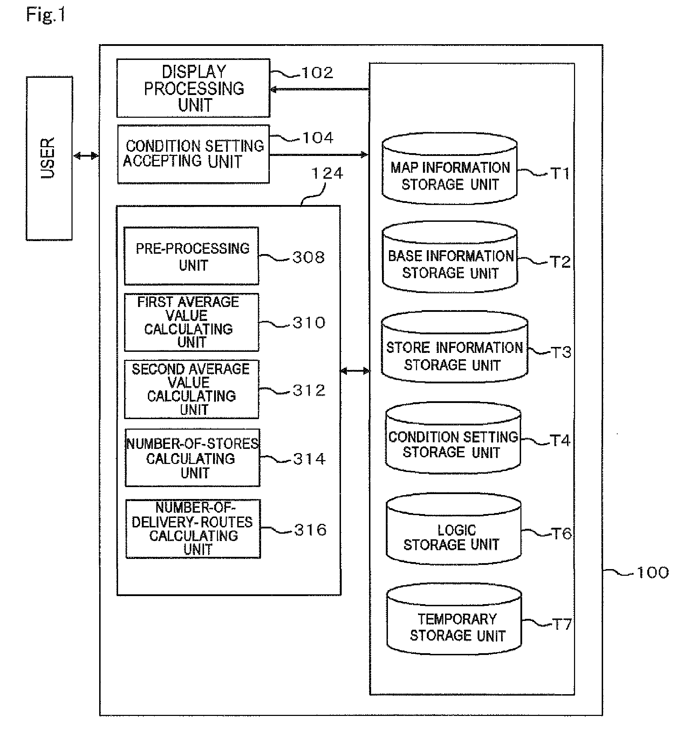

FIG. 1 is a block diagram illustrating a configuration of a system 100 for calculating the number of delivery routes of this embodiment.
The system 100 for calculating the number of delivery routes includes a display processing unit 102, a condition setting accepting unit 104, a necessary number calculating unit 124, a map information storage unit T1, a base information storage unit T2, a store information storage unit T3, a condition setting storage unit T4, a logic storage unit T6, and a temporary storage unit T7. The necessary number calculating unit 124 includes a pre-processing unit 308, a first average value calculating unit 310, a second average value calculating unit 312, a number-of-stores calculating unit 314, and a number-of-deliver-routes calculating unit 316.

The display processing unit 102 executes a process for outputting various data to be processed by the system 100 for calculating the number of delivery routes, on a screen (not illustrated) of a display device or the like.

The condition setting accepting unit 104 accepts inputs, from a user, of setting of various conditions, necessary for calculating the number of delivery routes. Among the setting inputs accepted by the condition setting accepting unit 104, information regarding the base is stored in the base information storage unit T2, information regarding the stores is stored in the store information storage unit T3, and the other information is stored in the condition setting storage unit T4.

The map information storage unit T1 stores map information data of a target region as target of the route creation. The logic storage unit T6 stores logics related to various processing procedures.

The base information storage unit T2 stores base information data. The base information data includes base-related information such as identification code of the base, name of the base, location of the base (latitude and longitude, or X-coordinate and Y-coordinate), total working time for every delivery route, time for loading articles onto a truck at the base, break time, working time of a staff after returning to the base, and standard load of each truck. The base herein means a base of delivery, such as a distribution depot, in the region.

The store information storage unit T3 stores store information data. The store information data includes store-related information such as identification code of the base, identification code of the stores, name of the stores, location of the stores (latitude, longitude and height, or X-coordinate, Y-coordinate and Z-coordinate), number of days of delivery per week, day(s)-of-week available for delivery, designated time of delivery, working time (min) at the stores, amount of delivery (t) per visit, round-trip travel time (min) between the base and each store, store-to-store travel time (min), monthly sales (yen), and monthly amounts of selling (packages) for every commodity.

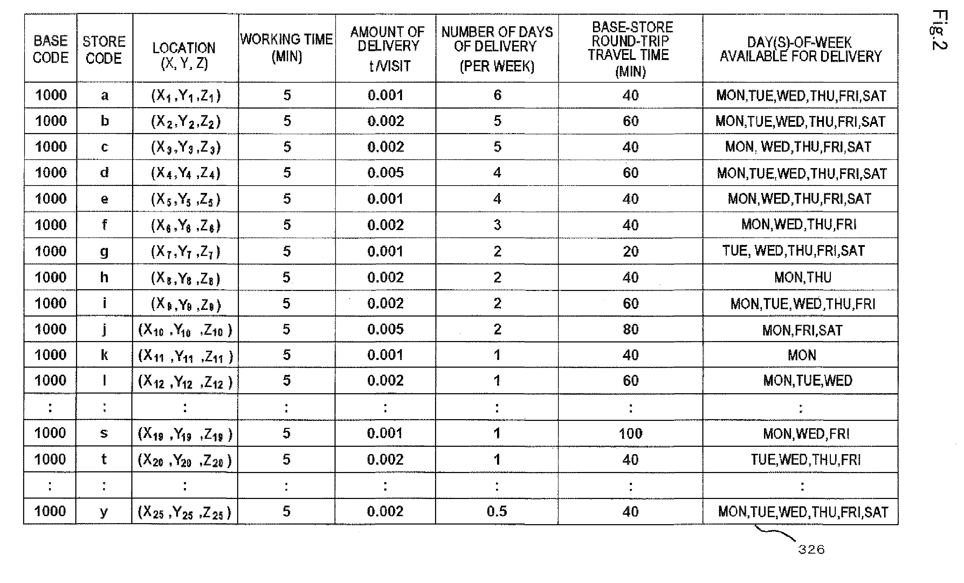

FIG. 2 is a drawing illustrating a part of data structure of a delivery information storage unit 326 included in the store information storage unit T3 in this embodiment.
The delivery information storage unit 326 includes a "base code" column, a "store code" column, a "location column, a "working time (min)" column, an "amount of delivery (t/visit)" column, a "number-of-day (per week)" column, a "base-store round-trip travel time (min)" column, and a "day(s)-of-week available for delivery" column.

In this embodiment, the store information storage unit T3 (delivery information storage unit 326) stores travel time themselves between the base and the respective stores, as information that allows for calculation of travel time.

In this embodiment, it is assumed that the delivery is made on any weekday(s) from Monday to Saturday, excluding Sunday. In other words, the maximum number of days of delivery is six. The number of days of delivery is "n", which means that the delivery is made on n days per week. For example, the number of days of delivery is "6", which means that the delivery is necessary six days a week. Accordingly, a store, of which the number of days of delivery is six, needs the delivery every day from Monday to Saturday. The number of days of delivery is "0.5", which means that the delivery is necessary once every two weeks. In the column of the day(s)-of-week available for delivery, day(s)-of-week available for delivery are stored. While the configuration proposed herein is given to have the column of "day(s)-of-week available for delivery", the configuration may alternatively be given to have a column of "designated day(s)-of-week for delivery" for storing designated day(s) of week if they are designated. Still alternatively, a column of "day(s)-of-week unavailable for delivery" for storing day(s)-of-week unavailable for delivery to each store may be provided in place of the column of "day(s)-of-week available for delivery".

In the exemplary case illustrated in FIG. 2, for example, a store having store code "a" belongs to a base having base code "1000" and is located at "$(X_1,Y_1,Z_1)$", where a working time at the store is "5 minutes", an amount of delivery per visit of the store is "0.001 t", the number of days of delivery of the store is "6", a round-trip travel time between the base and the store is "40 minutes", and a day(s)-of-week available for delivery of the store is "Monday(Mon), Tuesday (Tue), Wednesday(Wed), Thursday(Thu), Friday(Fri) and Saturday(Sat)".

On the other hand, for example, regarding a store having store code "b", the number of days of delivery is "5", a round-trip travel time between the base and the store is "60 minutes", and a day(s)-of-week available for delivery is "Monday, Tuesday, Wednesday, Thursday, Friday and Saturday". Similarly, regarding a store having store code "c", the number of days of delivery is "5", a round-trip travel time between the base and the store is "40 minutes", and a day(s)-of-week available for delivery is "Monday, Wednesday, Thursday, Friday and Saturday". Regarding store having store code "d", the number of days of delivery is "4", a round-trip travel time between the base and the store is "60 minutes", and a day(s)-of-week available for delivery is "Monday, Tuesday, Wednesday, Thursday, Friday and Saturday". Regarding store having store code "e", the number of days of delivery is "4", a round-trip travel time between the base and the store is "40 minutes", and a day(s)-of-week available for delivery is "Monday, Wednesday, Thursday, Friday and Saturday".

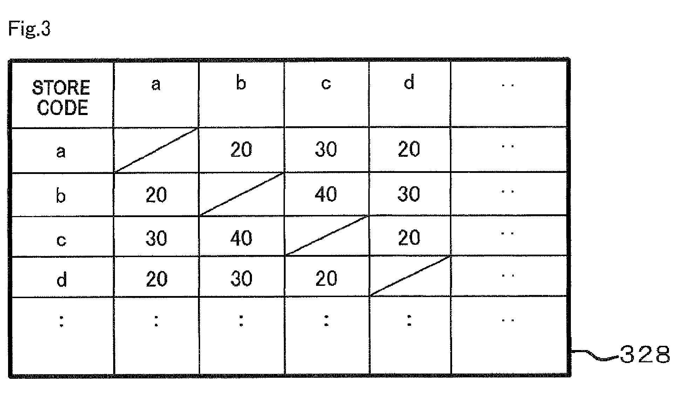

FIG. 3 is a drawing illustrating a part of data structure of a store-to-store travel time storage unit 328 included in the store information storage unit T3 in this embodiment. The store-to-store travel time storage unit 328 stores store-to-store travel time between the store itself and another store for every store. More specifically, in this embodiment, store information storage unit T3 (store-to-store travel time storage unit 328) stores the travel time themselves between respective stores and another store, as the information that allows for calculation of travel time between the respective stores and another store. For example, the store having store code "a" needs a travel time of "20 minutes" to the store having store code "b", a travel time of "30 minutes" to the store having store code "c", and a travel time of "20 minutes" to the store having store code "d".

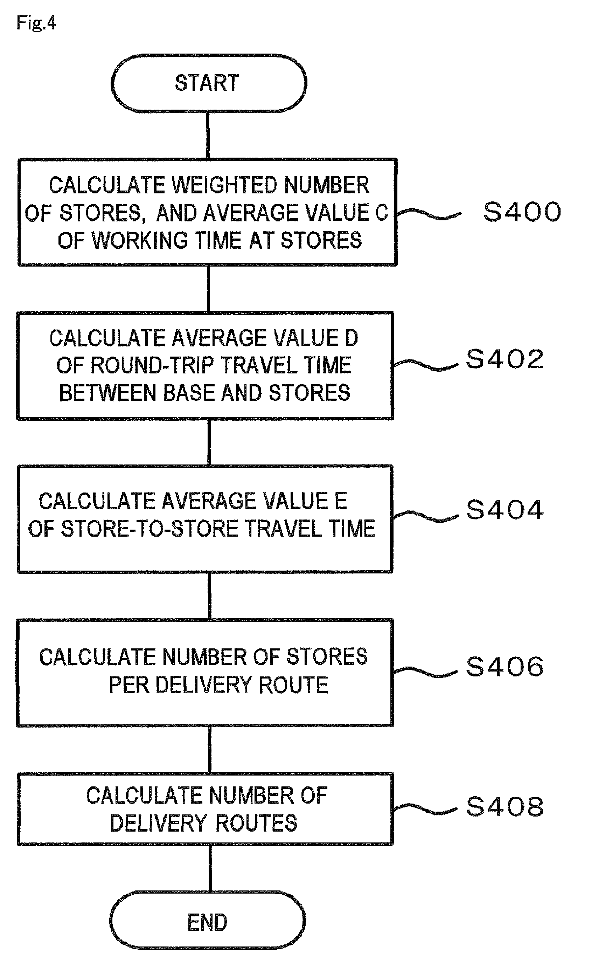

FIG. 4 is a flow chart illustrating processing procedures that the system 100 for calculating the number of delivery routes according to this embodiment calculates the number of delivery routes. The procedures will be explained referring also to FIG. 1 to FIG. 3.

First, the pre-processing unit 308 calculates the number of stores, the weighted number of stores M, and average value C of the working time at the stores (step S400). Alternatively, the average value C of the working time at the stores may preliminarily be calculated, and may be stored in the store information storage unit T3.

Next, the first average value calculating unit 310 calculates the average value D of the round-trip travel time between the base and the respective stores (step S402). In this calculation, the first average value calculating unit 310 calculates the average value D of the round-trip travel time between the base and the respective stores, considering only stores, where round-trip travel time between a base and respective stores amount to a predetermined rate or less when respective stores are selected in order of increasing time, with the exception of the other stores, among stores included in the area. In this way, an approximated value of the round-trip travel time between the base and each store in each delivery route, when actually creating delivery routes, may be obtained as the average value D, and thereby the average value D of the round-trip travel time between the base and the respective stores for accurately calculating the number of delivery routes may be obtained.

In this embodiment, in the process of detecting a predetermined rate of stores to be taken into account, the first average value calculating unit 310 weights each store depending on the number of days of delivery per week. The procedures will be explained below.

The first average value calculating unit 310 prepares, for each store available for delivery on a plurality of days per week, a plurality of sets of round-trip travel time between the base and the store corresponding to the number of days of delivery, referring to the information storage unit T3.

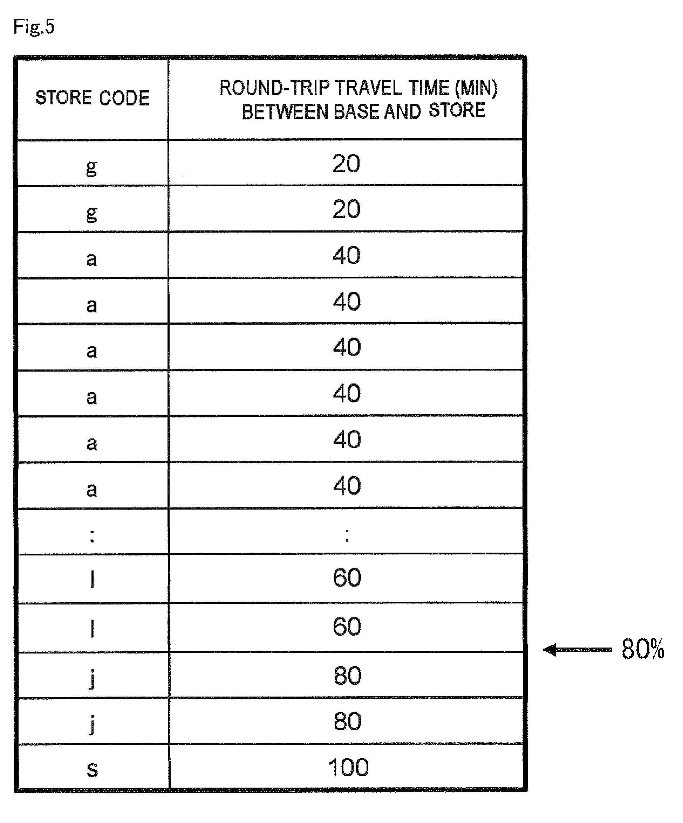

FIG. 5 is a drawing illustrating sets of round-trip travel time between a base and stores prepared by the first average value calculating unit 310. For the exemplary case typically illustrated in FIG. 2, regarding a store having store code "a", six sets are prepared, because the number of days of delivery per week is "6". Similarly, regarding a store having store code "g", two sets are prepared, because the number of days of delivery per week is "2". The first average value calculating unit 310 then aligns the sets of round-trip travel time between the base and the stores prepared as described in the above, in order of increasing round-trip travel time between the base and the stores.

Next, the first average value calculating unit 310 detects a boundary, which gives a rate of the number of sets relative to the total number of sets not larger than a predetermined rate, when aligned in order of the increasing round-trip travel time between the base and the stores. The predetermined rate herein may typically be set to 80%.

In an exemplary case typically illustrated in FIG. 5, the boundary which gives a rate not larger than 80% may be assumed between the store having store code "i" and the store having store code "j". In this case, it will be understood that the average value D of the round-trip travel time between the base and the stores is calculated, while considering only the stores, of which round-trip travel time are not longer than 60 minutes, among the stores included in the area.

The first average value calculating unit 310 calculates the average value D of the round-trip travel time between the base and the stores, by dividing the total of the round-trip travel time between the base and the stores in the individual sets which fall in the predetermined rate to be considered, by the number of sets which fall in the predetermined rate to be considered.

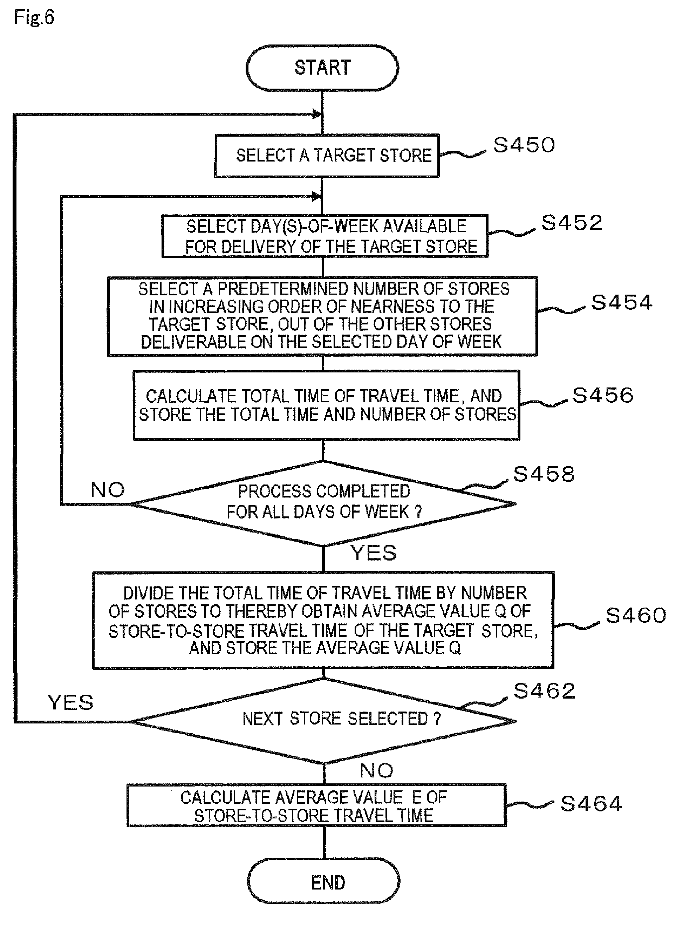

Referring now back to FIG. 4, the second average value calculating unit 312 calculates the average value E of the store-to-store travel time (step S404). FIG. 6 is a flow chart illustrating procedures by which the second average value calculating unit 312 calculates the average value E of the store-to-store travel time.

The second average value calculating unit 312 first calculates, for every store, an average value of the store-to-store travel time with respect to the store. First, one of the stores in the area is selected as a target store (step S450). Next, one of the days-of-week available for delivery of the target store is selected (step S452). Next, out of the other stores available for the delivery on the day of week selected in step S452, a predetermined number of stores are selected in order of increasing travel time from the target store selected in step S450 (step S454). The predetermined number herein may be "6", for example. Note that for the case where the number of other stores available for the delivery on the day of week selected in step S452 falls short of the predetermined number, only the stores available for the delivery on the day of week selected in step S452 are selected, even if the number thereof falls short of the predetermined number.

Next, the second average value calculating unit 312 calculates a total time of the travel time between the target store selected in step S450 and each of the stores selected in step S454, and temporarily stores the total time and the number of stores selected in step S454 in the temporary storage unit T7 (step S456).

Next, whether the process has completed for all of the days of week available for delivery to the target store or not is judged (step S458), and if any day of week was found to remain unprocessed (NO in step S458), the process goes back to step S452, and the same processes are repeated. On the other hand, for the case where the process was found to be completed for all of the days of week available for delivery to the target store in step S458 (YES in step S458), the total travel time is divided by the number of stores to thereby obtain average value Q of the store-to-store travel time of the target store, and the quotient is stored to the temporary storage unit T7 (step S460).

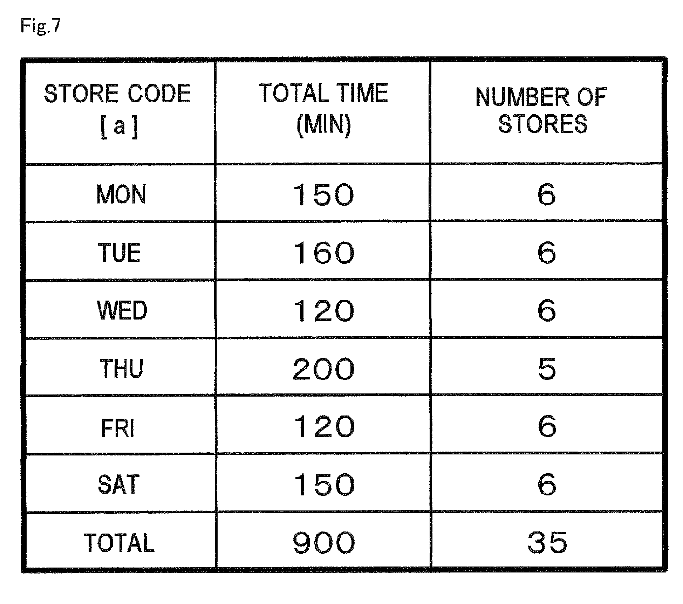

FIG. 7 is a drawing illustrating an exemplary internal configuration of the temporary storage unit T7. Now, an exemplary case where the target store is a store having store code "a" will be explained.

According to the example illustrated in FIG. 2, regarding the store having store code a", a day(s)-of-week available for delivery is "Monday, Tuesday, Wednesday, Thursday, Friday and Saturday". Accordingly, the processes explained referring to the step S452 to step S456 are executed for each of Monday, Tuesday, Wednesday, Thursday, Friday and Saturday. It now assumes that the total travel time and the number of stores for each day of week are consequently given as shown in FIG. 7. The second average value calculating unit 312 calculates a grand total of the total time and a total of the number of stores for the individual days of week. As a consequence, the grand total time is given as 900 minutes, and the number of store is given as 35. In the process of step S460, the second average value calculating unit 312 consequently calculates the average value Q (= 900 minutes/35 = 25.71) of the store-to-store travel time of the store having store code a".

Referring now back to FIG. 6, whether the process has completed for all stores in the area or not is then judged (step S462), and if any store was found to remain unprocessed (YES in step S462), the process goes back to step S450, and the same processes are repeated. On the other hand, for the case where the process was found to be completed for all stores in step S462 (NO in step S462), a total of the average value Q of the store-to-store travel time for all stores is divided by the number of stores in the area, to thereby calculate the average value E of the store-to-store travel time of the stores in the area (step S464).

By the process described in the above, the average value Q of the travel time between each of the stores and the other store may accurately be calculable, depending on characteristics of the stores included in the area, and thereby the average value E of the store-to-store travel time of the stores in the area may accurately be calculable.

Referring now back to FIG. 4, the number-of-stores calculating unit 314 then calculates the number of stores per delivery route N, using the (equation 2) described in the above (step S406). Next, the number-of-deliver-routes calculating unit 316 calculates the number of delivery routes P, using the (equation 1) described in the above (step S408).

According to the system 100 for calculating the number of delivery routes of this embodiment, the necessary number of delivery routes may accurately be calculable, depending on characteristics of the area.


(Second Embodiment)

This embodiment is different from the first embodiment in that the number-of-deliver-routes calculating unit 316 calculates the number of delivery routes P, while taking only the stores who actually sells commodities in a predetermined period into account, rather than taking all stores in the area into account.

For an exemplary case where the articles to be delivered are commodities that need distribution license such as cigarette, it may be possible to understand, for example, from when the commodities may be sold at the individual stores, or when the stores will close the business, depending on status of application for permission. This embodiment will be explained referring to the case where the individual stores are stores for selling cigarettes. In this embodiment, the delivery information storage unit 326 has, in addition to the configuration of the delivery information storage unit 326 illustrated in FIG. 2, a "store type" column, a "relation" column, and date-of-adoption columns such as a "date-of-start" column and a "date-of-closure" column.

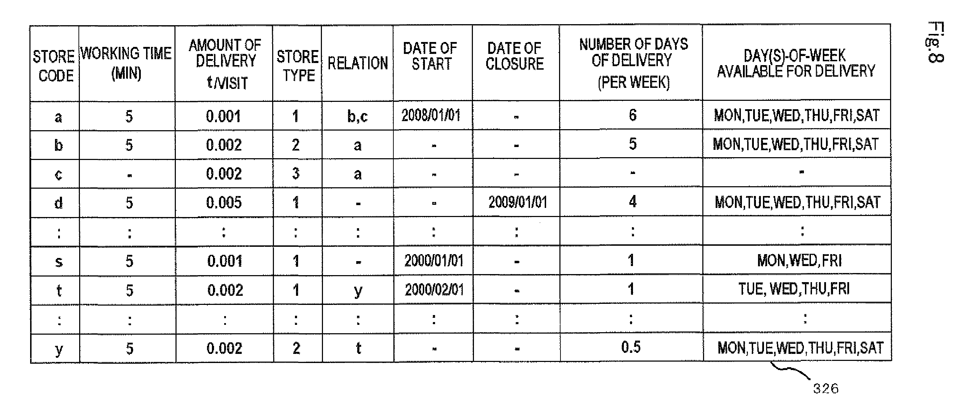

FIG. 8 is a drawing illustrating an exemplary configuration of the delivery information storage unit 326 of the store information storage unit T3 in this embodiment.

The delivery information storage unit 326 has, in addition to the configuration of the delivery information storage unit 326 illustrated in FIG. 2, a store type column, a relation column, a date-of-start column and a date-of-closure column.

Also in this embodiment, the delivery information storage unit 326 includes still other columns similar to those illustrated in FIG. 2, although not shown herein.

The "date-of-start" column and the "date-of-closure" column of the delivery information storage unit 326 may be allowed to store date on which selling of cigarettes starts and ends, respectively, at the individual stores.

Cigarettes may be sold by authorized stores having distribution license (referred to as "licensed stores", hereinafter) rightly at the licensed stores in some cases, and at brunch stores (referred to as "sublicensed stores", hereinafter) in other cases. For the case of selling at the sublicensed stores, the cigarettes as the commodities may be delivered from the licensed stores to the sublicensed stores in some cases, and may directly be delivered to the sublicensed stores in other cases. For the case where the cigarettes are delivered from the licensed store to the sublicensed store, it is necessary to deliver the articles to the licensed store in a state of adding the amount of cigarettes to be delivered to the sublicensed store to the amount of articles (cigarettes) to be delivered to the licensed store. The column of "store type" stores codes which represent whether each store is a licensed store or a sublicensed store, and if the store is a sublicensed store, the column of "store type" stores codes which represent whether the cigarettes are delivered from the licensed store or directly to the sublicensed store. In this embodiment, code "1" represents that the store is a licensed store, code "2" represents that the store is a sublicensed store to which the articles are directly delivered, and code "3" represents that the store is a sublicensed store to which the articles are delivered from the licensed store.

The column of "relation" stores relations between the licensed stores and the sublicensed stores. For example, the store having store code "a" is a licensed store in relation to the stores having codes "b" and "c". For example, when the amount of article to be delivered to the store having store code "a" is considered, it is necessary to consider also the amount of articles to be delivered to the stores having store code "c", out of all sublicensed stores, to which the articles are delivered from the licensed store. On the other hand, as for the stores having store code "b" to which the articles are directly delivered, there is no need of taking the amount of articles to be delivered to the stores having store code "b" into account, when the amount of articles to be delivered to the stores having store code "a" is considered. Date of adoption of store code "b" to the store depends on date of adoption of store code "a" to the store.

In this embodiment, the condition setting accepting unit 104 may accept inputs of conditions of the target stores for which a process for calculating the number of delivery routes is executed. The condition setting accepting unit 104 may accept, for example, inputs of date of start, date of closure, and store type of the target stores. Now, since there is no need to consider delivery of the articles to the stores having store type "3" in the process of route creation, so that the condition setting accepting unit 104 may accept inputs of "1" and "2" as the store type of the target stores.

In this embodiment, the necessary number calculating unit 124 extracts stores which satisfy the entered condition accepted by the condition setting accepting unit 104, and executes processes similar to those explained in the first embodiment only with respect to the extracted stores, to thereby calculate the necessary number of delivery routes in the area.

According to the processes as described in the above, the necessary number of delivery routes may accurately be calculable, depending on characteristics of the area in the actual process of delivery.

The number of stores as destinations of delivery amounts to a huge value when considered on a nationwide basis. For example, referring to a case where the destination stores are plotted on a digital map, response to the processes may degrade to a considerable degree if the number of stores is huge. Accordingly, it may be preferable to avoid reading of data of stores irrelevant to the processes, in view of improving the response to the processes. By the way, as for approval and authorization business for predetermined commodities such as cigarettes, turnover of the stores which are going to start or close the business will be accelerated for the future. Accordingly, while reading of data of the closed stores may be no more necessary, it may not be preferable to delete physical record of the closed store. It may be preferable to preliminarily store also stores before starting the business, because the preliminary entries of the stores, which are going to start the business for the future, in a form of physical record allows preliminary simulation. According to the configuration of this embodiment, by providing the date-of-start column and the date-of-closure column to the delivery information storage unit 326, the system is allowed to read logical record, without reading all of the physical records. Accordingly, by virtue of a combination process of a basic technology (platform, such as digital map) and an application, it may now be possible to make the system sequentially read only logical record while considering the physical records, and thereby to improve the response.

The individual constituents of the system 100 for calculating the number of delivery routes illustrated in FIG. 1 represent functional blocks, rather than configurations on the hardware basis. The individual constituents of the system 100 for calculating the number of delivery routes may be embodied by arbitrary combinations of hardware and software, typified by CPU of arbitrary computer, memory, program loaded on the memory so as to embody the constituents illustrated in the drawing, storage units for storing the program such as hard disk, and interface for network connection. It may be understood by those skilled in the art that methods and devices for the embodiment allows various modifications.

The present invention has been explained referring to the embodiments. Those skilled in the art will recognize that the embodiments are described merely for exemplary purposes, while allowing various modified combinations of the individual constituents and the individual processes, and that also such modifications fall within the scope of the present invention.

The embodiments described in the above dealt with the case where the store information storage unit T3 stores the travel time itself between the base and each store, as the information that allows for calculation of the travel time between the base and each store, and the travel time itself between each store and another store, as the information that allows for calculation of the travel time between each store and another store. In another example, the store information storage unit T3 may alternatively store location information of the base and each store, as the information that allows for calculation of the travel time between the base and each store. In this case, the system 100 for calculating the number of delivery routes may further include a travel time calculating unit that calculates travel time between the base and each store, based on the location information. In this case, the map information storage unit T1 may store road information such as speed limit of road and shortest path between the stores. The travel time calculating unit may calculate travel time between the base and each store, based on the location information of the base and each store, and the road information. The travel time calculating unit may also calculate store-to-store travel time, based on the location information of each store, and road information.

For example, in a process of calculating the travel time between a certain store and another store, the travel time calculating unit detects, at first, along which road the staff travels, based on the location information of these stores, and the road information. Next, the travel time calculating unit calculates the store-to-store travel time based on the speed limit of the road to be used and travel distance.

**Claims**

1. A system for calculating the necessary number of delivery routes when creating a plurality of delivery routes on which a staff delivers articles sequentially from a base to respective circular-visiting points in an area including the base and the circular-visiting points and returns to the base, said system comprising:

   a storage unit that stores information that allows for calculation of travel time between the base and the respective circular-visiting points and between any one of the circular-visiting points and any other one of the circular-visiting points, information that allows for calculations of working time A per said delivery route and average value C of working time at said respective circular-visiting points, and the number of days of delivery per week and day(s)-of-week available for delivery to the respective circular-visiting points;
   an average value calculating unit that calculates average value D of round-trip travel time between the base and the respective circular-visiting points and average value E of travel time between any one and any other one of the circular-visiting points included in the area based on the information that allows for the calculation of travel time;
   a number-of-circular-visiting-points calculating unit that calculates the number of circular-visiting points N included per delivery route in the area based on the working time A per the delivery route, the average value C of the working time at the circular-visiting points, the average value D of round-trip travel time between the base and the respective circular-visiting points, and the average value E of travel time between any one and any other one of the circular-visiting points; and
   a number-of-delivery-routes calculating unit that calculates the necessary number of delivery routes P for the area by dividing the number of circular-visiting points M, which is weighted with the number of days of delivery per week to the respective circular-visiting points, by the number of circular-visiting points N;
   said average value calculating unit that calculates the average value D, considering only circular-visiting points where round-trip travel time between the base and respective circular-visiting points amount to a predetermined rate or less when respective round-trip travel time are selected in order of increasing time, with the exception of the other circular-visiting points.

2. The system for calculating the number of delivery routes according to Claim 1,
   wherein said average value calculating unit weights the round-trip travel time between the base and the respective circular-visiting points, referring to the number of days of delivery per week to the respective circular-visiting points, detects the circular-visiting points where the round-trip travel time amount to the predetermined rate or less under the thus-weighted condition, and calculates the average value D considering only the circular-visiting points.

3. The system for calculating the number of delivery routes according to Claim 2,
   wherein said average value calculating unit prepares a certain number of sets of the round-trip travel time between the base and the respective circular-visiting points, the certain number based on the number of days of delivery per week to the respective circular-visiting points, detects the sets of the round-trip travel time where round-trip travel time between the base and respective circular-visiting points amount to a predetermined rate or less when respective round-trip travel time are selected in order of increasing time, and calculates the average value D considering only the detected sets of the round-trip travel time.

4. The system for calculating the number of delivery routes according to any one of Claims 1 to 3,

wherein said average value calculating unit executes:

a step of calculating, for every circular-visiting point, an average value of the travel time between the circular-visiting point itself and any other one of the circular-visiting points; and

a step of calculating the average value E based on the average value calculated for every circular-visiting point.

5. The system for calculating the number of delivery routes according to Claim 4, wherein said step of calculating, for every circular-visiting point, an average value of the travel time between the circular-visiting point itself and any other one of the circular-visiting points, includes:

selecting the circular-visiting point as a target circular-visiting point;

sequentially selecting the days-of-week available for delivery to the circular-visiting point;

selecting, for each of the days-of-week available for delivery, a predetermined number of circular-visiting points, from the other circular-visiting points visitable on the selected day-of-week, in order of increasing travel time between the circular-visiting point itself and the target circular-visiting point;

calculating an average time of the travel time between each of the selected circular-visiting points and the target circular-visiting point; and

determining an average value of the average time, calculated for each of the days-of-week available for delivery, as an average value of the travel time between the circular-visiting point and each of other circular-visiting points.

6. The system for calculating the number of delivery routes according to any one of Claims 1 to 5, wherein the information that allows for calculation of travel time is location information of the base and the respective circular-visiting points, and

said system further comprises:

a travel time calculating unit that calculates travel time between the base and each of the respective circular-visiting points based on the location information.

7. A method, executed by a computer system, of calculating the necessary number of delivery routes when creating a plurality of delivery routes on which a staff delivers articles sequentially from a base to respective circular-visiting points in an area including the base and the circular-visiting points and returns to the base,

said computer system comprising:

a storage unit that stores information that allows for calculation of travel time between the base and the respective circular-visiting points and between any one of the circular-visiting points and any other one of the circular-visiting points, information that allows for calculations of working time A per said delivery route and average value C of working time at the respective circular-visiting points, and the number of days of delivery per week and day(s)-of-week available for delivery to the respective circular-visiting points;

an average value calculating unit;

a number-of-circular-visiting-points calculating unit; and

a number-of-delivery-routes calculating unit,

said average value calculating unit comprising:

a step of calculating average value D of round-trip travel time between the base and the respective circular-visiting points and average value E of travel time between any one and any other one of the circular-visiting points included in the area based on the information that allows for the calculation of travel time;

a step of calculating the number of circular-visiting points N included per delivery route in the area based on the working time A per the delivery route, the average value C of the working time at the circular-visiting points, the average value D of round-trip travel time between the base and the respective circular-visiting points, and the average value E of travel time between any one and any other one of the circular-visiting points; and

a step of calculating the necessary number of delivery routes P for the area by dividing the number of circular-visiting points M, which is weighted with the number of days of delivery per week to the respective circular-visiting points, by the number of circular-visiting points N, and wherein

said average value calculating unit that calculates the average value D, in said step of calculating the average value D, considering only circular-visiting points where round-trip travel time between the base and respective circular-visiting points amount to a predetermined rate or less when respective round-trip travel time are selected in order of increasing time, with the exception of the other circular-visiting points.

8. A program for calculating the necessary number of delivery routes when creating a plurality of delivery routes on which a staff delivers articles sequentially from a base to respective circular-visiting points in an area including the base and the circular-visiting points and returns to the base,
said program being configured to make a computer function as:

a storage unit that stores information that allows for calculation of travel time between the base and the respective circular-visiting points and between any one of the circular-visiting points and any other one of the circular-visiting points, information that allows for calculations of working time A per said delivery route and average value C of working time at said respective circular-visiting points, and the number of days of delivery per week and day(s)-of-week available for delivery to the respective circular-visiting points;

an average value calculating unit that calculates average value D of round-trip travel time between the base and the respective circular-visiting points and average value E of travel time between any one and any other one of the circular-visiting points included in the area based on the information that allows for calculation of travel time;

a number-of-circular-visiting-points calculating unit that calculates the number of circular-visiting points N included per delivery route in the area based on the working time A per the delivery route, the average value C of the working time at the circular-visiting points, the average value D of round-trip travel time between the base and the respective circular-visiting points, and the average value E of travel time between any one and any other one of the circular-visiting points; and

a number-of-delivery-routes calculating unit that calculates the necessary number of delivery routes P for the area by dividing the number of circular-visiting points M, which is weighted with the number of days of delivery per week to the respective circular-visiting points, by the number of circular-visiting points N, and

said average value calculating unit calculating the average value D, considering only circular-visiting points where round-trip travel time between the base and respective circular-visiting point amount to a predetermined rate or less when respective round-trip travel time are selected in order of increasing time, with the exception of the other circular-visiting points.

Fig.1

## Fig.2

| BASE CODE | STORE CODE | LOCATION (X,Y,Z) | WORKING TIME (MIN) | AMOUNT OF DELIVERY t/VISIT | NUMBER OF DAYS OF DELIVERY (PER WEEK) | BASE-STORE ROUND-TRIP TRAVEL TIME (MIN) | DAY(S)-OF-WEEK AVAILABLE FOR DELIVERY |
|---|---|---|---|---|---|---|---|
| 1000 | a | $(X_1,Y_1,Z_1)$ | 5 | 0.001 | 6 | 40 | MON,TUE,WED,THU,FRI,SAT |
| 1000 | b | $(X_2,Y_2,Z_2)$ | 5 | 0.002 | 5 | 60 | MON,TUE,WED,THU,FRI,SAT |
| 1000 | c | $(X_3,Y_3,Z_3)$ | 5 | 0.002 | 5 | 40 | MON, WED,THU,FRI,SAT |
| 1000 | d | $(X_4,Y_4,Z_4)$ | 5 | 0.005 | 4 | 60 | MON,TUE,WED,THU,FRI,SAT |
| 1000 | e | $(X_5,Y_5,Z_5)$ | 5 | 0.001 | 4 | 40 | MON,WED,THU,FRI,SAT |
| 1000 | f | $(X_6,Y_6,Z_6)$ | 5 | 0.002 | 3 | 40 | MON,WED,THU,FRI |
| 1000 | g | $(X_7,Y_7,Z_7)$ | 5 | 0.001 | 2 | 20 | TUE, WED,THU,FRI,SAT |
| 1000 | h | $(X_8,Y_8,Z_8)$ | 5 | 0.002 | 2 | 40 | MON,THU |
| 1000 | i | $(X_9,Y_9,Z_9)$ | 5 | 0.002 | 2 | 60 | MON,TUE,WED,THU,FRI |
| 1000 | j | $(X_{10},Y_{10},Z_{10})$ | 5 | 0.005 | 2 | 80 | MON,FRI,SAT |
| 1000 | k | $(X_{11},Y_{11},Z_{11})$ | 5 | 0.001 | 1 | 40 | MON |
| 1000 | l | $(X_{12},Y_{12},Z_{12})$ | 5 | 0.002 | 1 | 60 | MON,TUE,WED |
| .. | .. | .. | .. | .. | .. | .. | .. |
| 1000 | s | $(X_{19},Y_{19},Z_{19})$ | 5 | 0.001 | 1 | 100 | MON,WED,FRI |
| 1000 | t | $(X_{20},Y_{20},Z_{20})$ | 5 | 0.002 | 1 | 40 | TUE,WED,THU,FRI |
| .. | .. | .. | .. | .. | .. | .. | .. |
| 1000 | y | $(X_{25},Y_{25},Z_{25})$ | 5 | 0.002 | 0.5 | 40 | MON,TUE,WED,THU,FRI,SAT |

326

Fig.3

| STORE CODE | a | b | c | d | . . |
|:---:|:---:|:---:|:---:|:---:|:---:|
| a | / | 20 | 30 | 20 | . . |
| b | 20 | / | 40 | 30 | . . |
| c | 30 | 40 | / | 20 | . . |
| d | 20 | 30 | 20 | / | . . |
| : | : | : | : | : | . . |

~328

Fig.4

```
        ┌─────────────────┐
        │      START      │
        └─────────────────┘
                 │
    ┌─────────────────────────────┐
    │  CALCULATE WEIGHTED NUMBER  │
    │ OF STORES, AND AVERAGE VALUE C │ ～ S400
    │   OF WORKING TIME AT STORES │
    └─────────────────────────────┘
                 │
    ┌─────────────────────────────┐
    │  CALCULATE AVERAGE VALUE D  │
    │  OF ROUND-TRIP TRAVEL TIME  │ ～ S402
    │   BETWEEN BASE AND STORES   │
    └─────────────────────────────┘
                 │
    ┌─────────────────────────────┐
    │  CALCULATE AVERAGE VALUE E  │
    │ OF STORE-TO-STORE TRAVEL TIME │ ～ S404
    └─────────────────────────────┘
                 │
    ┌─────────────────────────────┐
    │ CALCULATE NUMBER OF STORES  │
    │     PER DELIVERY ROUTE      │ ～ S406
    └─────────────────────────────┘
                 │
    ┌─────────────────────────────┐
    │    CALCULATE NUMBER OF      │
    │     DELIVERY ROUTES         │ ～ S408
    └─────────────────────────────┘
                 │
        ┌─────────────────┐
        │      END        │
        └─────────────────┘
```

Fig.5

| STORE CODE | ROUND-TRIP TRAVEL TIME (MIN) BETWEEN BASE AND STORE |
|:---:|:---:|
| g | 20 |
| g | 20 |
| a | 40 |
| a | 40 |
| a | 40 |
| a | 40 |
| a | 40 |
| a | 40 |
| : | : |
| l | 60 |
| l | 60 |
| j | 80 |
| j | 80 |
| s | 100 |

◄──── 80%

Fig.6

START

SELECT A TARGET STORE — S450

SELECT DAY(S)-OF-WEEK AVAILABLE FOR DELIVERY OF THE TARGET STORE — S452

SELECT A PREDETERMINED NUMBER OF STORES IN INCREASING ORDER OF NEARNESS TO THE TARGET STORE, OUT OF THE OTHER STORES DELIVERABLE ON THE SELECTED DAY OF WEEK — S454

CALCULATE TOTAL TIME OF TRAVEL TIME, AND STORE THE TOTAL TIME AND NUMBER OF STORES — S456

PROCESS COMPLETED FOR ALL DAYS OF WEEK ? — S458

NO

YES

DIVIDE THE TOTAL TIME OF TRAVEL TIME BY NUMBER OF STORES TO THEREBY OBTAIN AVERAGE VALUE Q OF STORE-TO-STORE TRAVEL TIME OF THE TARGET STORE, AND STORE THE AVERAGE VALUE Q — S460

NEXT STORE SELECTED ? — S462

YES

NO

CALCULATE AVERAGE VALUE E OF STORE-TO-STORE TRAVEL TIME — S464

END

Fig.7

| STORE CODE [a] | TOTAL TIME (MIN) | NUMBER OF STORES |
|---|---|---|
| MON | 150 | 6 |
| TUE | 160 | 6 |
| WED | 120 | 6 |
| THU | 200 | 5 |
| FRI | 120 | 6 |
| SAT | 150 | 6 |
| TOTAL | 900 | 35 |

Fig.8

EP 2 333 716 A1

| STORE CODE | WORKING TIME (MIN) | AMOUNT OF DELIVERY t/VISIT | STORE TYPE | RELATION | DATE OF START | DATE OF CLOSURE | NUMBER OF DAYS OF DELIVERY (PER WEEK) | DAY(S)-OF-WEEK AVAILABLE FOR DELIVERY |
|---|---|---|---|---|---|---|---|---|
| a | 5 | 0.001 | 1 | b,c | 2008/01/01 | - | 6 | MON,TUE,WED,THU,FRI,SAT |
| b | 5 | 0.002 | 2 | a | - | - | 5 | MON,TUE,WED,THU,FRI,SAT |
| c | - | 0.002 | 3 | a | - | - | - | - |
| d | 5 | 0.005 | 1 | - | - | 2009/01/01 | 4 | MON,TUE,WED,THU,FRI,SAT |
| : | : | : | : | : | : | : | : | : |
| s | 5 | 0.001 | 1 | - | 2000/01/01 | - | 1 | MON,WED,FRI |
| t | 5 | 0.002 | 1 | y | 2000/02/01 | - | 1 | TUE, WED,THU,FRI |
| : | : | : | : | : | : | : | : | : |
| y | 5 | 0.002 | 2 | t | - | - | 0.5 | MON,TUE,WED,THU,FRI,SAT |

326

**EP 2 333 716 A1**

<table>
<tr><td colspan="2"><b>INTERNATIONAL SEARCH REPORT</b></td><td>International application No.<br>PCT/JP2009/004924</td></tr>
</table>

| | |
|---|---|
| A. CLASSIFICATION OF SUBJECT MATTER<br>*G06Q50/00(2006.01)i* | |

According to International Patent Classification (IPC) or to both national classification and IPC

B. FIELDS SEARCHED

Minimum documentation searched (classification system followed by classification symbols)
G06Q50/00

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-213161 A  (Japan Tobacco Inc.),<br>29 July 2004 (29.07.2004),<br>entire text; all drawings<br>(Family: none) | 1-8 |
| A | JP 2004-213068 A  (Japan Tobacco Inc.),<br>29 July 2004 (29.07.2004),<br>entire text; all drawings<br>(Family: none) | 1-8 |
| P,A | WO 2009/119040 A1  (Japan Tobacco Inc.),<br>17 March 2009 (17.03.2009),<br>entire text; all drawings<br>(Family: none) | 1-8 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 November, 2009 (04.11.09) | Date of mailing of the international search report<br>17 November, 2009 (17.11.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 333 716 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004127038 A